# EUROPÄISCHE PATENTSCHRIFT

(11) **EP 2 496 937 B1**
(45) Veröffentlichungstag und Bekanntmachung des Hinweises auf die Patenterteilung: **24.04.2019**
(21) Anmeldenummer: 10805416.4
(22) Anmeldetag: 02.11.2010
(51) Int. Cl.: G01N 29/28, G10K 11/02

(54) **KOPPLUNGSELEMENT ZUR AKUSTISCHEN ANKOPPLUNG EINES SCHALLWANDLERS AN EINEN KÖRPER SOWIE SCHALLWANDLER UMFASSEND EIN DERARTIGES KOPPLUNGSELEMENT**
COUPLING ELEMENT FOR ACOUSTIC COUPLING OF A TRANSDUCER TO A PART AND TRANSDUCER COMPRISING SUCH A COUPLING ELEMENT
ÉLÉMENT DE COUPLAGE POUR LE COUPLAGE ACOUSTIQUE D'UN TRANSDUCTEUR ACOUSTIQUE À UN CORPS ET TRANSDUCTEUR ACOUSTIQUE COMPRENANT UN TEL ÉLÉMENT DE COUPLAGE

(30) Priorität: 02.11.2009 DE 202009014771 U
(43) Veröffentlichungstag der Anmeldung: 12.09.2012
(73) Patentinhaber: Seuthe, Ulrich, 58300 Wetter (DE)
(72) Erfinder: Seuthe, Ulrich, 58300 Wetter (DE)
(74) Vertreter: Grosse Schumacher Knauer von Hirschhausen
(86) Internationale Anmeldenummer: PCT/EP2010/006657
(87) Internationale Veröffentlichungsnummer: WO 2011/050991

(56) Entgegenhaltungen:
- EP-A2- 0 095 619
- DE-A1- 3 814 367
- DE-A1-102006 059 413
- US-A- 2 913 602
- US-A- 3 663 842
- US-A- 5 426 980

## Beschreibung

### GEBIET DER ERFINDUNG

Die Erfindung betrifft ein Kopplungselement gemäß dem Oberbegriff des Anspruchs 1. Demnach ist das Kopplungselement zur akustischen Ankopplung eines Schallwandlers an einen Körper vorgesehen. Außerdem betrifft die Erfindung einen Schallwandler nach dem Oberbegriff des Anspruchs 8. Hiernach dient der Schallwandler zur Erfassung und/oder Erzeugung von hochfrequentem Körperschall bei der maschinellen Werkstückbearbeitung.

### TECHNISCHER HINTERGRUND

Die maschinelle Bearbeitung von Werkstücken mit beispielsweise spanabhebenden Werkzeugen kann durch Erfassen des Körperschalls, der während der Bearbeitung erzeugt wird, überwacht werden, um bei der Werkstückbearbeitung auftretende Fehler wie etwa eine Rissbildung im Werkstück oder einen Werkzeugbruch zu erkennen.

Eine derartige Zustands- oder Bruchüberwachung eines Werkzeugs oder Werkstücks ist aus der DE 10 2006 023 716 B3 bekannt. Dort ist an den beiden flachen Stirnseiten eines zu überwachenden Werkstücks jeweils ein Schallsensor flächig in Auflage gebracht. Auf Basis einer Laufzeitdifferenzmessung von Schallsignalen zu den beiden Schallsensoren kann beispielsweise ein Bohrerbruch festgestellt werden. An die Ankopplung des Schallsensors an das Werkstück sind hier aber keine besonderen Anforderungen gestellt, da lediglich das Vorhandensein eines Schallsignals erkannt werden muss.

Weist das Werkstück keine flache Ankopplungsmöglichkeit für den Schallsensor sondern Rundungen auf, kann für eine punktuelle Ankopplung des Schallsensors an das Werkstück ein Kopplungselement in Form eines Tastarms gemäß DE 94 03 901 U1 verwendet werden. Nachteilig hieran ist jedoch, dass die Anlagefläche des Schallsensors auf der Oberfläche des Werkstücks gering ist. Das führt dazu, dass nur eine geringe Schallleistung von dem Werkstück auf den Schallsensor übertragen wird, während der überwiegende Anteil der zur Auswertung zur Verfügung stehenden Körperschallleistung ungenutzt bleibt.

Neben der geringen übertragenen Schallleistung ist bei einer nur punktuellen Ankopplung jedoch auch das übertragene Schallspektrum begrenzt und bei der DE 94 03 901 U1 durch einen Schleifkontakt zudem möglicherweise mit Störsignalen behaftet und verfälscht.

Eine derartige bekannte punktuelle Ankopplung eignet sich daher nicht für Verfahren, bei denen das Schallemissionsspektrum insgesamt erfasst und ausgewertet wird. Insbesondere bei Erfassen des Schallemissionsspektrums bis in sehr hohe Frequenzbereiche hinein erweist sich eine nur punktuelle Ankopplung als ungeeignet. Eine flächige Ankopplung eines Schallsensors an runde oder stufige Werkstücke ist aber oftmals nicht möglich, da die Kontaktflächen nicht komplementär sind.

Aus der DE 10 2006 059 413 A1 ist eine Vorrichtung zur zerstörungsfreien Prüfkörperuntersuchung mit niederfrequenten Schallsignalen bekannt, umfassend ein Koppelelement mit einer elastischen Oberfläche und einem Flüssigkeit oder Gel gefüllten Volumen. Aus der US 5 426 980 A ist ein Ultraschallwandler für niederfrequente Schallsignale mit einer flexiblen Membran bekannt. JP 08-0 21 828 A beschreibt die Verwendung von Hohlräumen in einem Wellenleiter zur Dämpfung von Schallwellen. JP 2006-3 49 486 A offenbart einen Schallsensor mit einer Kontaktfläche, die komplementär zur anzukoppelnden Kontaktfläche geformt ist. Die US 2 913 602 A offenbart ein Kopplungselement, bei dem ein Diaphragma als Kontaktfläche zwischen einem Schallwandler und einem Werkstück über ein Kunststoffbauteil gespannt ist und eine mit Flüssigkeit gefüllte Kammer bildet. Die EP 0 095 619 A2 offenbart Koppelmedien.

Vor diesem Hintergrund liegt der Erfindung die Aufgabe zugrunde, ein Kopplungselement und einen Schallwandler nach dem Oberbegriff des Anspruchs 1 bzw. 10 zu schaffen, mit denen eine verbesserte Schallübertragung zwischen einerseits einem Körper wie etwa einem maschinell bearbeitbaren Werkstück oder einem Werkzeug und andererseits einem Schallsensor erreicht wird.

### DARSTELLUNG DER ERFINDUNG

Diese Aufgabe wird durch ein Kopplungselement zur akustischen Ankopplung eines Schallwandlers an einen Körper sowie durch einen Schallwandler gemäß Anspruch 1 bzw. 8 gelöst.

Demnach ist das Kopplungselement zumindest bereichsweise verformbar, wodurch es im Wesentlichen formschlüssig an den Körper kontaktierbar ist. So gelingt eine Anpassung der sensitiven Fläche eines Schallwandlers auch an beliebig geformte Oberflächen, z.B. an Rundungen, Ecken, Stufen, Kanten, hervorstehende Komponenten und dergleichen. Eine besonders gute Kopplung wird insbesondere dann erzielt, wenn der Schallwandler zusammen mit dem Kopplungselement mit einer Kraft gegen den Körper gepresst wird. Das verformbare Kopplungselement schmiegt sich an die Oberfläche des Körpers an. Auf diese Weise wird eine möglichst große Kontaktfläche gebildet. Durch die große Kontaktfläche zwischen Körper und Kopplungselement und damit auch zwischen Körper und Schallwandler ist es möglich, eine vergleichsweise hohe Schallleistung von dem Körper über das Kopplungselement auf den Schallwandler zu übertragen. Die Energieausbeute der Schallaufnahme wird durch das erfindungsgemäße Kopplungselement beispielsweise gegenüber Tastarmen, insbesondere solchen mit einer Spitze und somit kleinen Kontaktfläche, deutlich erhöht. Zudem kann ein großes und insbesondere hochfrequentes Schallspektrum für eine Schallfrequenzauswertung im wesentlichen unverfälscht und breitbandig übertragen werden. Eine derartige insbesondere breitbandige Schallfrequenzauswertung, der ein Schallemissionsspektrum bis in hohe, vorzugsweise sehr hohe Frequenzen wie etwa in den hohen MHz-Bereich, ermöglicht im Vergleich zu anderen Techniken eine erheblich verbesserte Prozessüberwachung.

Durch das Kopplungselement ist vorzugsweise solcher Schall von dem Schallwandler auf den Köper und/oder von dem Körper auf den Schallwandler übertragbar, der bei der maschinellen Bearbeitung des insbesondere einem Werkstück oder einem Werkzeug zugeordneten Körpers erzeugt wird. Dieser Schall wird aus hochfrequentem Körperschall gebildet. Die Auswertung dieses hochfrequenten Körperschallspektrums liefert Rückschlüsse auf die Güte der Werkstückbearbeitung. Durch die zumindest bereichsweise Verformbarkeit des erfindungsgemäßen Kopplungselementes können auch Körperschallsignale von Werkstücken oder Werkzeugen mit beliebig geformten Oberflächen bei einer vergleichsweise hohen Übertragung der Schallleistung ausgewertet werden.

Erfindungsgemäß umfasst das Kopplungselement eine Füllung, die zumindest abschnittsweise mit einer Umhüllung umgeben ist, wobei die Umhüllung verformbar ist. Es ist zweckmäßig, wenn auch die Füllung verformbar ist. Füllung und Umhüllung können dabei einen sackartigen Behälter bilden. Dieser Behälter sollte so beschaffen sein, dass Körperschallsignale möglichst breitbandig und insbesondere unter Einschluss des hochfrequenten Spektrumabschnitts hinreichend stark und vorzugsweise unverfälscht transmittiert werden.

In einer bevorzugten Ausführungsform des erfindungsgemäßen Kopplungselementes kann vorgesehen sein, dass die Umhüllung plastisch oder elastisch verformbar ist. Für die Umhüllung eignet sich dabei insbesondere ein dehnbares Material, mit welchem eine vergleichsweise gute Anpassung an die beliebig geformte Oberfläche des Körpers respektive des Werkstücks möglich ist. Bei einer elastischen Verformbarkeit ist eine Anpassung des Kopplungselementes an verschieden geformte Körper besonders gut möglich. Es gelingt auf diese Weise Schallsignale unterschiedlicher Werkstücke mit hoher Effizienz zu erfassen. Dies ist insbesondere in der industriellen Fertigung beispielsweise metallischer Werkstücke insofern vorteilhaft, als dort in unterschiedlichen Zyklen unterschiedliche Werkstücke mit jeweils unterschiedlich geformten Oberflächen zu fertigen sind.

Die Umhüllung der Füllung des erfindungsgemäßen Kopplungselementes kann wahlweise aus einer Folie, einem Netz, einem Textil oder wahlweise aus einer beliebigen Kombination daraus gebildet sein. Vorzugsweise ist die Folie aus einem Kunststoff mit elastischen Eigenschaften gebildet. Das Schalltransmissionsverhalten der Folie sollte so beschaffen sein, dass auch hochfrequenter Schall zumindest anteilig transmittiert wird. Zusätzlich sollte die Folie den Anforderungen des Bearbeitungsprozesses des Werkstückes genügen, wobei insbesondere Temperatur- und chemische Beständigkeitsanforderungen zu berücksichtigen sind. Ferner sollte die Schichtdicke der Folie den Anforderungen an den Grad der plastischen oder elastischen Verformbarkeit angepasst sein. Eine aus einem Netz gebildete Umhüllung der Füllung bietet alternativ den Vorteil, dass die Füllung akustisch nicht von der Umgebung isoliert ist. Es ist bei der Ausführung der Umhüllung als Netz möglich, dass der Inhalt des Netzes direkten Kontakt mit dem Körper respektive dem Werkstück und/oder dem Gehäuse des Schallwandlers hat. Dieser direkte Kontakt der Füllung verbessert die Schalltransmission. Eine Umhüllung, welche aus einem Textil gebildet ist, zeichnet sich durch sowohl hohe Verformbarkeit als auch hohe mechanische Belastbarkeit und Beanspruchbarkeit aus.

Erfindungsgemäß weist die Füllung Transmissionskörper auf, die untereinander zumindest im an den zu überwachenden Körper angelegten oder angedrückten Zustand wenigstens teilweise derart in Kontakt stehen, dass sie einen oder mehrere Schallübertragungswege zwischen Schallwandler und Körper bilden. Derartige Transmissionskörper sind vorteilhafterweise aus einem festen Material gebildet. Es kann sich dabei beispielsweise um Metallkugeln, ein Granulat oder dergleichen handeln. Wesentlich ist, dass die Schallausbreitung im Festkörper bei hohen Frequenzen deutlich besser ist, als in solchen Materialien, die keinen festen Aggregatzustand aufweisen. Dies trifft beispielsweise auf viele Metalle zu. Sie zeichnen sich auch durch eine Übertragung einer höheren Bandbreite von Schallfrequenzen aus, wobei aus festen Materialien gebildete Transmissionskörper auch den hochfrequenten Anteil im Schallspektrum übertragen. Sind die Schallgeschwindigkeiten in den Transmissionskörpern identisch oder zumindest ähnlich zu denjenigen im Körper (Werkstück, Werkzeug, Maschine, Rahmen etc.) und/oder im Schallwandler, dann sind etwaige Reflektionsverluste deutlich geringer als bei einer Schallankopplung mit Flüssigkeit oder Gas. Bei geometrisch unregelmäßig geformten Transmissionskörpern kann die Interpretation der Schalldaten, insbesondere der Schallreflexionen an den Grenzflächen der Transmissionskörper, aufwendig sein. Zur Erleichterung der Interpretation der Schalldaten kann es daher sinnvoll sein, wenn alle in der Füllung enthaltenen Transmissionskörper eine einheitliche Geometrie aufweisen und aus dem gleichen Material gebildet sind. Sind viele kleine Transmissionskörper vorgesehen, bilden sich durch die Kontakte der Transmissionskörper untereinander viele parallele Schallübertragungswege zwischen dem Körper und dem Schallwandler, die eine breitbandiges Schallspektrum übertragen. Zur Verbesserung der Schalltransmission kann es vorteilhaft sein, wenn die Transmissionskörper etwa durch die Umhüllung vom Schallwandler akustisch nicht isoliert sind, sondern dessen Schallkontaktfläche direkt kontaktieren. Daher erweist es sich als zweckmäßig, wenn die Umhüllung zumindest eine Unterbrechung aufweist, so dass die Transmissionskörper in der Füllung direkt mit einem Abschnitt des Schallwandlers kontaktierbar sind. Die Füllung wird demnach zum einen von der Umhüllung und zum anderen von zumindest einem Bereich der dem Kopplungselement zugewandten Fläche des Abschnitts des Schallwandlers begrenzt. Dieser Abschnitt kann beispielsweise durch die Sensorfläche selbst oder durch einen Bereich des Gehäuses in der Umgebung der Sensorfläche gebildet sein. Entscheidend ist, dass im Bereich des Schallwandlers die Transmissionskörper direkt mit der Sensorfläche in Berührung stehen können, ohne dass zwischen der Sensorfläche und den Transmissionskörpern durch die Umhüllung eine akustische Isolation gebildet wird.

Vorteilhafterweise können die Transmissionskörper im wesentlichen kugelförmig und/oder polyederförmig gebildet sein. Diese Formen der Transmissionskörper, die bevorzugt metallisch oder auch keramisch oder aus einem anderen sehr harten Material gebildet sein können, führen zu einer hohen Raumfüllung des erfindungsgemäßen Kopplungselementes mit sowohl festen Materialien zur Transmission des hochfrequenten Anteils des Schallspektrums als auch mit der Eigenschaft der Verformbarkeit des Kopplungselementes zur Anpassung an beliebig geformte Flächen. Bei Kugeln oder Polyedern identischer Abmessungen und identischen Materials lassen sich die Schallreflexion an den Kugeloberflächen leichter aus den Schalldaten bei der Datenverarbeitung herausfiltern. Beim Anpressen eines Schallwandlers mit einem erfindungsgemäßen Kopplungselement an einem Körper wie etwa einem Werkstück oder einem Werkzeug verschieben sich die Kugeln und/oder Polyeder innerhalb der Füllung des Kopplungselementes so lange, bis sie eine stabile Lage einnehmen, in der möglichst viele Transmissionskörper untereinander akustisch kontaktiert sind. Der Schall wird somit von dem Körper respektive dem Werkstück oder Werkzeug über die untereinander kontaktierten (Metall-)Transmissionskörper auf die Sensorfläche bzw. auf das Gehäuse des Sensors übertragen. Bei Abweichung von der Kugelgestalt der Transmissionskörper kann die Raumfüllung des Kopplungselementes zwar optimiert werden, es kann dadurch aber die (plastische) Verformbarkeit der Füllung beinträchtig werden; Polyeder erlauben aber eine erhöhte Kraft zur Herstellung einer kraftschlüssigen Verbindung, da die Querkräfte und damit der Seitendruck auf die Umhüllung geringer ausfallen als bei Kugeln. Je höher die Raumausfüllung mit Kugeln oder ähnlich geformten Transmissionskörpern ist, desto besser ist die gesamte Schalltransmission des Kopplungselementes. Etwaige Schalltransmissions-Verluste sind abhängig von der Beschaffenheit der Umhüllung der Füllung, insbesondere deren Dicke oder Stärke, sowie von dem Gesamtvolumen der Zwischenräume zwischen den Kugeln respektive den Transmissionskörpern.

Zusätzlich kann es zweckmäßig sein, wenn die Füllung eine Flüssigkeit umfasst. Die Flüssigkeit sollte dabei vorzugsweise eine hohe Viskosität haben, was beispielsweise bei einem Öl der Fall ist. Wahlweise kann die Füllung auch ein niederviskoses Fett umfassen. Besonders vorteilhaft ist eine Füllung, die sowohl eine Flüssigkeit oder ein Fett als auch Transmissionskörper umfasst. Dabei werden die Transmissionskörper von der Flüssigkeit bzw. von dem Fett umgeben. Die Flüssigkeit überträgt dabei bevorzugt den niederfrequenten Teil des Schallspektrums. Alternativ kann auch ein Gel bzw. eine gelartige Substanz als Bestandteil der Füllung angebracht sein. Dieses Gel zeichnet sich durch die Eigenschaft der Verformbarkeit aus. Es dient als (Träger-)Medium für die Transmissionskörper. Umfasst die Füllung eine Flüssigkeit, sollte der Druck der Flüssigkeit in der Füllung des Kopplungselementes so gewählt sein, dass eine Verschiebung von darin enthaltenen Transmissionskörpern möglich ist. Beim Anpressen des Kopplungselementes an den Körper kann der Druck der Flüssigkeit variieren, wird jedoch durch die hydraulischen Eigenschaften der Flüssigkeit beschränkt.

Es kann vorgesehen sein, dass die Füllung eine oder mehrere Hohlstellen umfasst. Das Vorhandensein von Hohlstellen ermöglicht eine bessere Anpassung der Oberfläche der Umhüllung an die Freiformfläche des Körpers respektive des Werkstücks. Die Variabilität des verformbaren Kopplungselementes wird dadurch erhöht. Wahlweise kann die Hohlstelle mit einem Gas gefüllt sein.

Gegenstand der Erfindung ist auch ein Schallwandler, insbesondere zur Erfassung und/oder Erzeugung von vorzugsweise hochfrequentem Körperschall bei der maschinellen Werkstückbearbeitung. Der Schallwandler umfasst einen Schallsensor und/oder einen Schallgeber, und zweckmäßigerweise ein Gehäuse. Erfindungsgemäß ist an dem Schallwandler ein Kopplungselement angeordnet, welches zumindest bereichsweise verformbar ist, wodurch es im Wesentlichen formschlüssig an den Körper kontaktierbar ist. Dieses Kopplungselement kann sich durch ein oder mehrere der vorbeschriebenen Merkmale auszeichnen. Der Körper, dessen Schall erfasst werden soll, kann durch ein Werkzeug oder ein Werkstück gebildet oder mit diesem schallgekoppelt sein, z.B. ein Werkstückhalter sein. Insbesondere kann dieser Körper Freiformflächen aufweisen, beispielsweise konkav oder konvex geformte Flächen oder Profilierungen an der Oberfläche. Durch die Verformbarkeit des Kopplungselementes des erfindungsgemäßen Schallwandlers wird der Kontaktbereich zwischen Freiformfläche des Körpers und Sensorfläche des Schallwandlers vergrößert. Es ist somit möglich, eine höhere Schallleistung von dem Körper auf den Schallwandler bzw. von dem Schallwandler auf den Körper insbesondere breitbandiger zu übertragen. Insbesondere die Körperschallinterpretation bei einer Werkstückbearbeitung wird dadurch effizienter, wodurch die Werkstückbearbeitung letztlich sicherer und qualitativ hochwertiger wird. Dies umso mehr als durch die Erhöhung der übertragenen Schallleistung auch schwache Schallsignale detektierbar werden, die einer entsprechend schwachen Anomalie in der Werkstückbearbeitung zuzuordnen sind. Dabei kann es sich beispielsweise um die Bildung sehr feiner Risse handeln.

Vorteilhafterweise weist der Schallsensor und/oder Schallgeber ein Gehäuse auf, an dem das Kopplungselement befestigt ist. Kopplungselement und Schallwandler bilden somit eine apparative Einheit.

Das Kopplungselement kann ferner ein Anschlussstück umfassen, an welchem das Gehäuse befestigbar ist. Das Anschlussstück wird dabei vorzugsweise aus einem Metall gebildet, insbesondere aus dem gleichen Metall, aus dem auch wesentliche Bestandteile des Kopplungselementes und des Gehäuses gebildet sind. Metall zeichnet sich dabei durch besonders gute akkustische Leitfähigkeit im hochfrequenten Anteil eines (Körper-)Schallspektrums aus.

Vorzugsweise ist das Anschlussstück an dem Schallgehäuse und/oder an dem Schallgebergehäuse durch eine formschlüssige, eine kraftschlüssige und/oder eine stoffschlüssige Verbindung befestigbar. So kann das Anschlussstück beispielsweise mit dem Schallsensorgehäuse verschraubt werden. Alternativ dazu kann es auch steckbar sein. Die Ausgestaltung des erfindungsgemäßen Schallwandlers mit einem verschraubbaren oder steckbaren Anschlussstück ermöglicht es, das Kopplungselement bei Bedarf von dem Schallwandler zu entfernen. Somit kann beispielsweise bei einer plan geformten Oberfläche des Werkstücks der Schallwandler ohne Kopplungselement mit seiner ebenfalls plan geformten Sensorfläche direkt auf das Werkstück aufgesetzt werden. Werden im Anschluss an die Bearbeitung dieses Werkstücks mit planer Oberfläche Werkstücke mit Freiformoberflächen bearbeitet, so kann der Schallwandler bedarfsweise mit dem erfindungsgemäßen Kopplungselement durch Verbindung an dem Anschlussstück verwendet werden. In besonderen Fällen kann es auch zweckmäßig sein, wenn das Kopplungselement auf dem Schallsensorgehäuse bzw. dem Schallgebergehäuse verklebt wird. Eine solche Verbindung zeichnet sich dadurch aus, dass sie besonders robust ist. Insbesondere bei häufigen Werkstückwechseln kann dabei das erfindungsgemäße Kopplungselement nicht etwa versehentlich abhanden kommen.

Alternativ kann auch eine Verbindung des Anschlussstückes durch eine (permanent-)magnetische Wechselwirkung zwischen Anschlussstück und Schallwandlergehäuse vorgesehen sein. Hierbei umfasst das Anschlussstück einen Permanentmagneten oder einen Elektromagneten, wodurch das Anschlussstück an dem magnetischen Schallsensorgehäuse anhaftet. Auch die Transmissionskörper können permanent magnetisch oder magnetisierbar sein; unterhalb der Sensorfläche kann ein Magnet angebracht sein, sodass durch den Ankopplungssack hindurch bzw. aus ihm heraus der Kraftschluss und/oder Formschluss an die Maschinenteile bzw. das Werkstück durch Magnetkraft erreicht werden kann, was insbesondere für manuelle Anhaftungen die Handhabung erleichtert und eine reproduzierbare Anpresskraft erzeugt.

Bei einer vorteilhaften Ausgestaltung des erfindungsgemäßen Schallwandlers wird der Schallsensor und/oder der Schallgeber aus einem piezoelektrischen Bauteil gebildet. Piezoelektrische Bauteile eignen sich besonders gut zur Schallübertragung im hochfrequenten Bereich des Schallspektrums. Darüber hinaus ist die akustische Ankopplung piezoelektrischer Komponenten an metallische Werkstücke bzw. metallische Bestandteile des erfindungsgemäßen Kopplungselementes gut geeignet.

Die vorgenannten sowie beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien eingeschränkt Anwendung finden können.

Weitere Einzelheiten, Merkmale und Vorteile des Gegenstandes der Erfindung ergeben sich aus den Ansprüchen, sowie aus der nachfolgenden Beschreibung und der zugehörigen Zeichnung, in der - beispielhaft - Ausführungsbeispiele eines Kopplungselementes und eines Schallwandlers dargestellt sind. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

- Fig. 1: illustriert schematisch eine Vorrichtung zur Werkstückbearbeitung mit einem spanabhebenden Werkzeug, wobei an dem Werkstück Mittel zur Aufnahme des Körperschalls vorgesehen sind,
- Fig. 2: illustriert schematisch ein zwischen einem Werkstück und einem Schallwandler angeordnetes Kopplungselement und
- Fig. 3: illustriert schematisch einen Schallwandler mit einem Kopplungselement, welches mittels eines Anschlussstücks an dem Schallwandler befestigt ist.

### DETAILLIERTE BESCHREIBUNG VON AUSFÜHRUNGSBEISPIELEN

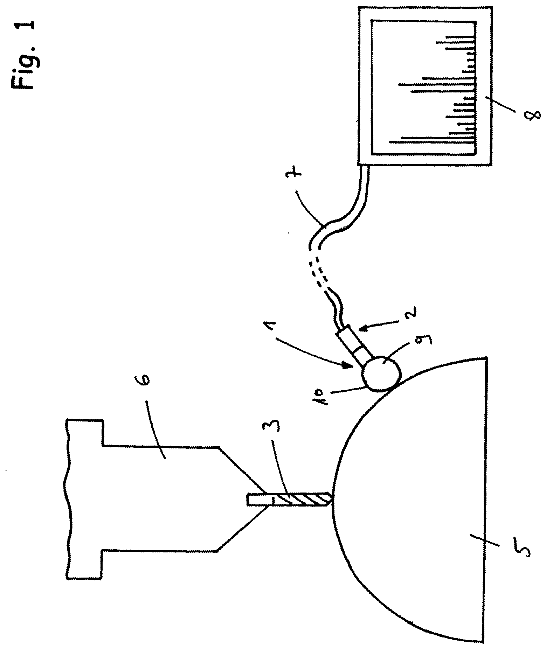

Fig. 1 zeigt eine Werkzeugbearbeitungsvorrichtung 6, bei der ein Werkstück 5 mit einem Werkzeug 3, hier beispielhaft ein Bohrer, bearbeitet wird. Zur Überwachung der Güte der Werkstückbearbeitung ist an dem Werkstück 5 ein Schallwandler 2 angebracht, der über eine Leitung 7 mit einer Auswerteeinheit 8 verbunden ist.

Die Körperschallsignale des Werkstücks 5, welche während der Bearbeitung mit dem Werkzeug 3 erzeugt werden, werden mit dem Schallwandler 2 erfasst, und in der Auswerteeinheit 8 ausgewertet. Kommt es bei der Werkstückbearbeitung zu einem Bruch oder zu einer Rissbildung, so kann dies durch Interpretation der Schallsignale in der Auswerteeinheit 8 erkannt werden. Es ist somit die Möglichkeit gegeben, Werkstücke 5 auszusortieren, bei deren Bearbeitung ein Mangel entstanden sein könnte. Die Auswertung ermöglicht auch weitere Feststellungen wie z.B. Rückschlüsse auf den Verschleißzustand des Werkzeugs usw. Durch die Überwachung wird die Güte der Werkstückbearbeitung insgesamt verbessert. Der Schallwandler 2 kann auch am Werkzeug 6 oder an einem mit dem Werkzeug 6 und/oder dem Werkstück 5 schallgekoppelten Maschinenteil wie etwa einem Rahmen angekoppelt sein.

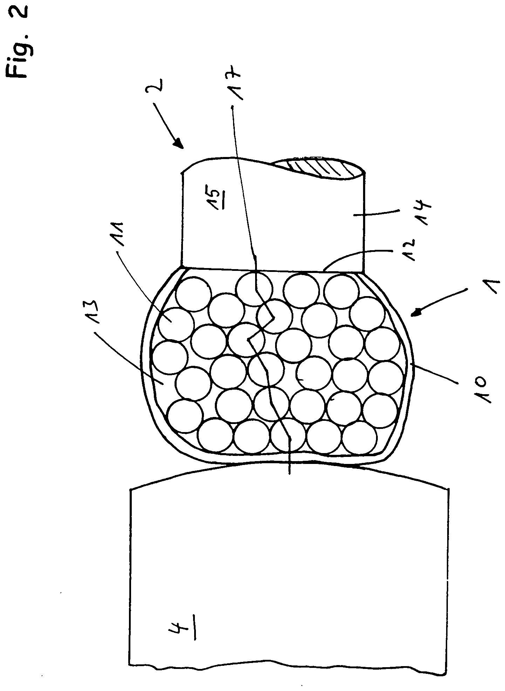

Das Werkstück 5 weist hier beispielhaft eine ballig bzw. konvex geformte Oberfläche auf. Wegen der konvexen Oberfläche kann ein Schallwandler 2, dessen Schallsensor 14, vgl. Fig. 2, eine plane Sensorfläche aufweist, nur in unzureichender Weise direkt an dem Werkstück 5 angebracht werden. Daher umfasst der Schallwandler 2 gemäß Fig. 1 ein Kopplungselement 1, welches verformbar ist.

Wird der Schallwandler 2 nun mit einer Kraft gegen das Werkstück 5 gedrückt, so verformt sich das Kopplungselement 1 und schmiegt sich an die gewölbte Oberfläche des Werkstücks 5 an. Dadurch wird die Kontaktfläche zwischen dem Schallwandler 2 und dem Werkstück 5 durch das verformbare und an die Oberfläche anpassbare Kopplungselement 1 vergrößert. Durch die vergrößerte Kontaktfläche ist die Übertragung einer insgesamt höheren Schallleistung von dem Werkstück 5 auf den Schallwandler 2 möglich. Es können somit auch schwache Schallsignale von der Auswerteeinheit 8 erfasst werden. Derart schwache Schallsignale werden beispielsweise dann erzeugt, wenn in dem Werkstück 5 bei der Bearbeitung durch das Werkzeug 3 ein sehr feiner Riss gebildet wird.

Der bei der Werkstücksbearbeitung emittierte Körperschall umfasst überwiegend hochfrequente Schallfrequenzen. Alternativ dazu kann auch vorgesehen sein, dass der Schallwandler 2 einen Schallgeber aufweist, mit dem ein Schallsignal auf das Werkstück 5 übertragen wird. Diese Schallübertragung auf das Werkstück 5 kann einerseits der direkten Überwachung der Werkzeugbearbeitung dienen, andererseits kann durch den übertragenen Schall auch eine Kalibrierung des Schallwandlers 2 bzw. der Kombination aus Werkstück 5 und Schallwandler 2 erfolgen.

Ein Kopplungselement 1 zur akustischen Ankopplung eines Schallwandlers 2 an einen Körper 4 kann der Fig. 2 entnommen werden. Dadurch, dass das Kopplungselement 1 zumindest bereichsweise verformbar ist, ist es im Wesentlichen formschlüssig an den Körper 4 kontaktierbar. Der Fig. 2 ist zu entnehmen, dass das Kopplungselement 1 eine Füllung 9 aufweist, die zumindest abschnittsweise mit einer Umhüllung 10 umgeben ist. Die Umhüllung 10 ist dabei ebenfalls verformbar. Vorzugsweise kann die Umhüllung 10 plastisch oder elastisch verformbar sein. Die Umhüllung 10 kann beispielsweise aus einer Folie, einem Netz, einem Textil oder einer Kombination daraus gebildet sein. Der Fig. 2 ist auch zu entnehmen, dass die Füllung 9 Transmissionskörper 11 umfasst, die untereinander in Kontakt stehen und viele parallele Schallübertragungswege 17, von denen beispielhaft einer illustriert ist, zwischen Körper 4 und Schallwandler 2 bilden. Dabei ist es zweckmäßig, dass die Umhüllung 10 zumindest eine Unterbrechung 12 aufweist. Im Bereich der Unterbrechung 12 sind die Transmissionskörper 11 direkt mit einem Abschnitt des Schallwandlers 2 kontaktierbar. Im Bereich dieses Abschnitts des Schallwandlers 2 kann sich die Sensorfläche des dem Schallwandler 2 zugeordneten Schallsensors 14 befinden.

Die Transmissionskörper 11 sind gemäß Fig. 2 im Wesentlichen kugelförmig gebildet. Es kann zweckmäßig sein, wenn die Kugeln 11 von einer Flüssigkeit umgeben sind. Bei dieser Flüssigkeit kann es sich beispielsweise um ein Öl handeln. Wahlweise oder ergänzend kann es zweckmäßig sein, wenn die Füllung 9 eine oder mehrere Hohlstellen 13 umfasst. Die Ausgestaltung des Kopplungselementes 1 mit Kugeln, welche vorzugsweise aus einem Metall gebildet sein können, und einem Öl, von welchem die Kugeln umgeben sind, bietet den Vorteil, dass sich das Kopplungselement 1 zum Einen sehr gut an die Freiformoberfläche des Körpers 4 anschmiegen kann, und dass dabei zum Anderen sowohl der nieder- als auch hochfrequente Anteil des Schallspektrums des Körperschalls von dem Körper 4 über die kugelförmigen Transmissionskörper 11 direkt auf die Sensorfläche des im Schallwandler 2 angeordneten Schallsensors 14 übertragbar sind. Dabei ist zu erkennen, dass das Gehäuse des Schallwandlers 2 einstückig mit dem Kopplungselement 1 verbunden ist. Die Verbindung ist dergestalt, dass die Umhüllung 10 der Füllung 9 des Kopplungselementes 1 direkt an dem Gehäuse des Schallwandlers 2 angebracht ist. Hierbei kann eine Klebeverbindung zweckmäßig sein. Bei passgenauer Herstellung ist ein Aufschrumpfen und zusätzlicher Formschluss mithilfe einer Nut möglich. Zusätzlich kann eine Sicherungshülse über der Kontaktstelle angebracht werden, hier ist Verschrauben wie bei einer Schelle, Klemmen, Schweißen, Löten, Kleben und/oder dergleichen möglich.

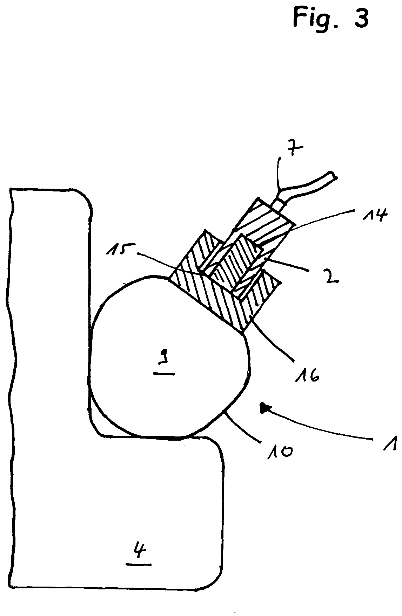

Ein Schallwandler 2, insbesondere zur Erfassung und/oder Erzeugung von vorzugsweise hochfrequentem Körperschall bei der maschinellen Werkstückbearbeitung, kann der Fig. 3 entnommen werden. Demnach umfasst der Schallwandler neben einem Schallsensor 14 und einem Gehäuse 15 auch ein Anschlussstück 16. Neben dem Schallsensor 14 kann auch ein Schallgeber vorgesehen sein, wobei der Schallsensor 14 zweckmäßigerweise ein kombinierter Schallsensor/Schallgeber ist. Schallsensor 14 und Schallgeber können als piezelektrisches Bauteil gebildet sein. Das Anschlussstück 16 bildet eine mechanische Kupplung zwischen dem Kopplungselement 1 und dem Gehäuse 15. Der Fig. 3 ist zu entnehmen, dass das Anschlussstück 16 mit dem Gehäuse des Schallwandlers 2 verschraubt sein kann. Alternativ zu der Schraubverbindung können auch andere Verbindungen vorgesehen sein. Diese können wahlweise formschlüssig, kraftschlüssig oder stoffschlüssig sein. Vorzugsweise ist das Anschlussstück 16 aus einem Metall gebildet. Die Ausgestaltung des erfindungsgemäßen Schallwandlers mit einem schraubbaren Anschlussstück hat den Vorteil, dass das Kopplungselement 1 bei Bedarf von dem Gehäuse des Schallwandlers 2 entnommen werden kann. Somit ist es möglich, den Schallwandler 2 wahlweise direkt, d. h. ohne Kopplungselement, auf der Oberfläche des Körpers 4 bzw. des Werkstücks anzubringen. In diesem Fall wäre die Sensorfläche bzw. des Gehäuses 15 des Schallsensors 14 direkt mit der Oberfläche des Werkstücks verbunden.

### BEZUGSZEICHENLISTE

- 1: Kopplungselement
- 2: Schallwandler
- 3: Werkzeug
- 4: Körper
- 5: Werkstück
- 6: Werkstückbearbeitungsvorrichtung
- 7: elektrischer Anschluss
- 8: Auswerteeinheit
- 9: Füllung
- 10: Umhüllung
- 11: Transmissionskörper
- 12: Unterbrechung
- 13: Hohlstellen
- 14: Schallsensor
- 15: Gehäuse
- 16: Anschlussstück
- 17: Schallübertragungsweg

## Patentansprüche

1. Kopplungselement zur akustischen Ankopplung eines Schallwandlers (2) an einen Körper (4) zum Übertragen von hochfrequentem Körperschall vom Schallwandler (2) auf den Körper (4) und/oder vom Körper (4) auf den Schallwandler (2) wobei das Kopplungselement (1) einen verformbaren Kontaktbereich zum formschlüssigen Kontaktieren des Körpers (4) sowie eine Füllung (9), die zumindest abschnittsweise mit einer verformbaren Umhüllung (10) umgeben ist, aufweist, **dadurch gekennzeichnet, dass** die Füllung (9) Transmissionskörper (11) umfasst, die zumindest teilweise untereinander in Kontakt bringbar sind und einen oder mehrere Schallübertragungswege (17) zwischen Schallwandler (2) und Körper (4) bilden können, die Füllung (9) und die Umhüllung (10) einen sackartigen Behälter bilden, und das Kopplungselement ein Anschlussstück umfasst, an welchem ein Gehäuse eines Schallsensors und/oder Schallgebers schallgekoppelt befestigbar und wieder entfernbar ist.

2. Kopplungselement nach Anspruch 1, **dadurch gekennzeichnet, dass** der Körper (4) ein maschinell von einem Werkzeug (3) bearbeitbares Werkstück (5) oder ein Werkzeug (3) ist oder mit dem Werkstück (5) und/oder dem Werkzeug (3) schallgekoppelt ist.

3. Kopplungselement nach Anspruch 1 oder 2, **dadurch gekennzeichnet, dass** die Umhüllung (10) plastisch oder elastisch verformbar ist.

4. Kopplungselement nach einem der Ansprüche 1 bis 3, **dadurch gekennzeichnet, dass** die Umhüllung aus einer Folie, einem Netz, einem Textil oder einer Kombination daraus gebildet ist.

5. Kopplungselement nach einem der Ansprüche 1 bis 4, **dadurch gekennzeichnet, dass** die Umhüllung (10) eine Unterbrechung (12) aufweist, in deren Bereich die Transmissionskörper (11) für eine direkte Kontaktierung eines Abschnitts des Schallwandlers (2) freiliegen.

6. Kopplungselement nach einem der Ansprüche 1 bis 5, **dadurch gekennzeichnet, dass** die Transmissionkörper (11) im Wesentlichen kugelförmig und/oder polyederförmig gebildet sind.

7. Kopplungselement nach einem der Ansprüche 1 bis 6, **dadurch gekennzeichnet, dass** die Füllung (9) eine Flüssigkeit und/oder zumindest eine Hohlstelle (13) aufweist.

8. Schallwandler zur Erfassung und/oder Erzeugung von hochfrequentem Körperschall bei der maschinellen Werkstückbearbeitung, mit einem Schallsensor (14) und/oder einem Schallgeber, **gekennzeichnet durch** ein Kopplungselement (1) nach einem der Ansprüche 1 bis 7.

9. Schallwandler nach Anspruch 8, **dadurch gekennzeichnet, dass** ein Gehäuse (15) zur Aufnahme des Schallsensors (14) und/oder Schallgebers vorgesehen und das Kopplungselement (1) an dem Gehäuse (15) befestigt ist.

10. Schallwandler nach Anspruch 8 oder 9, **dadurch gekennzeichnet, dass** das Anschlussstück (16) aus einem Metall gebildet und/oder magnetisch ist.

11. Schallwandler nach einem der Ansprüche 8 bis 10, **dadurch gekennzeichnet, dass** das Anschlussstück (16) mit dem Gehäuse (15) durch eine formschlüssige, eine kraftschlüssige und/oder eine stoffschlüssige Verbindung schallgekoppelt verbindbar ist.

12. Schallwandler nach einem der Ansprüche 8 bis 11, **dadurch gekennzeichnet, dass** der Schallsensor (14) und/oder der Schallgeber ein piezoelektrisches Bauteil umfasst.

13. Schallwandler nach einem der Ansprüche 8 bis 12, **dadurch gekennzeichnet, dass** die Transmissionskörper (11) magneitsch oder magnetisierbar sind.

14. Schallwandler nach Anspruch 13, **dadurch gekennzeichnet, dass** unterhalb der Sensorfläche ein Magnet vorgesehen ist.

## Claims

1. A coupling element for acoustically coupling a sonic transducer (2) to a body (4) for transferring high-frequency structure-borne sound from the sonic transducer (2) to the body (4) and/or from the body (4) to the sonic transducer (2), the coupling element (1) having a deformable contact region for contacting the body (4) in a positive manner and a filling (9), which is surrounded at least in certain sections with a deformable covering (10), **characterized in that** the filling (9) comprises transmission bodies (11), which can be brought into contact with one another at least to some extent and can form one or more sound transmission paths (17) between sonic transducer (2) and body (4), the filling (9) and the covering (10) form a saccular container, and the coupling element comprises a connection piece, to which a housing of a sound sensor and/or sound source can be fastened in a sound-coupled manner and removed again.

2. The coupling element according to Claim 1, **characterized in that** the body (4) is a workpiece (5) which can be processed mechanically by a tool (3) or a tool (3) or is sound-coupled to the workpiece (5) and/or the tool (3).

3. The coupling element according to Claim 1 or 2, **characterized in that** the covering (10) is plastically or elastically deformable.

4. The coupling element according to one of Claims 1 to 3, **characterized in that** the covering is formed from a film, a meshed fabric, a textile or a combination thereof.

5. The coupling element according to one of Claims 1 to 4, **characterized in that** the covering (10) has an interruption (12), in the region of which the transmission bodies (11) are exposed for direct contacting of a section of the sonic transducer (2).

6. The coupling element according to one of Claims 1 to 5, **characterized in that** the transmission bodies (11) are formed in a substantially spherical and/or polyhedral manner.

7. The coupling element according to one of Claims 1 to 6, **characterized in that** the filling (9) has a liquid and/or at least one cavity (13).

8. A sonic transducer for detecting and/or generating high-frequency structure-borne sound in mechanical workpiece processing, having a sound sensor (14) and/or a sound source, **characterized by** a coupling element (1) according to one of Claims 1 to 7.

9. The sonic transducer according to Claim 8, **characterized in that** a housing (15) is provided for accommodating the sound sensor (14) and/or sound source and the coupling element (1) is fastened on the housing (15).

10. The sonic transducer according to Claim 8 or 9, **characterized in that** the connection piece (16) is formed from a metal and/or is magnetic.

11. The sonic transducer according to one of Claims 8 to 10, **characterized in that** the connection piece (16) can be connected to the housing (15) in a sound-coupled manner by means of a connection which is positive, non-positive and/or materially connected.

12. The sonic transducer according to one of Claims 8 to 11, **characterized in that** the sound sensor (14) and/or the sound source comprises a piezoelectric component.

13. The sonic transducer according to one of Claims 8 to 12, **characterized in that** the transmission bodies (11) are magnetic or magnetizable.

14. The sonic transducer according to Claim 13, **characterized in that** a magnet is provided below the sensor surface.

## Revendications

1. Elément de couplage pour le couplage acoustique d'un transducteur acoustique (2) à un corps (4) pour la transmission d'un son corporel à fréquence élevée du transducteur acoustique (2) au corps (4) et/ou du corps (4) au transducteur acoustique (2), l'élément de couplage (1) comportant une zone de contact déformable pour la mise en contact par conformité de forme du corps (4) ainsi qu'un remplissage (9), qui est entourée au moins par section par une enveloppe déformable (10), **caractérisé en ce que** le remplissage (9) comprend des corps de transmission (11), qui peuvent être mis en contact entre eux au moins en partie et peuvent former une ou plusieurs voies de transmission acoustiques (17) entre le transducteur acoustique (2) et le corps (4), le remplissage (9) et l'enveloppe (10) forment un contenant de type sac et l'élément de couplage comprend une pièce de raccordement sur laquelle un boîtier d'un capteur acoustique et/ou d'émetteur de son peut être fixé en couplage acoustique et peut être à nouveau enlevé.

2. Elément de couplage selon la revendication 1, **caractérisé en ce que** le corps (4) est une pièce (5) pouvant être mécaniquement usinée par un outil (3) ou un outil (3) ou est couplé acoustiquement à la pièce (5) et/ou à l'outil (3).

3. Elément de couplage selon la revendication 1 ou 2, **caractérisé en ce que** l'enveloppe (10) est déformable du point de vue plastique ou élastique.

4. Elément de couplage selon l'une quelconque des revendications 1 à 3, **caractérisé en ce que** l'enveloppe est formée d'une feuille, d'un réseau, d'un textile ou d'une combinaison de ceux-ci.

5. Elément de couplage selon l'une quelconque des revendications 1 à 4, **caractérisé en ce que** l'enveloppe (10) comporte une interruption (12) dans la zone de laquelle les corps de transmission (11) sont exposés pour une mise en contact directe d'une section du transducteur acoustique (2).

6. Elément de couplage selon l'une quelconque des revendications 1 à 5, **caractérisé en ce que** les corps de transmission (11) sont pour l'essentiel formés en forme sphérique et/ou en forme polyédrique.

7. Elément de couplage selon l'une quelconque des revendications 1 à 6, **caractérisé en ce que** le remplissage (9) comporte un liquide et/ou au moins un vide (13).

8. Transducteur acoustique pour la saisie et/ou la production d'un son corporel à fréquence élevée lors de l'usinage mécanique de pièces, avec un capteur acoustique (14) et/ou un émetteur de son, **caractérisé par** un élément de couplage (1) selon l'une quelconque des revendications 1 à 7.

9. Transducteur acoustique selon la revendication 8, **caractérisé en ce qu'**un boîtier (15) est prévu pour logement du capteur acoustique (14) et/ou de l'émetteur de son et l'élément de couplage (1) est fixé au boîtier (15).

10. Transducteur acoustique selon la revendication 8 ou 9, **caractérisé en ce que** la pièce de raccordement (16) est formée d'un métal et/ou est magnétique.

11. Transducteur acoustique selon l'une quelconque des revendications 8 à 10, **caractérisé en ce que** la pièce de raccordement (16) peut être reliée en couplage acoustique au boîtier (15) par une liaison à conformité de forme, à conformité de force et/ou à conformité de matière.

12. Transducteur acoustique selon l'une quelconque des revendications 8 à 11, **caractérisé en ce que** le capteur acoustique (14) et/ou l'émetteur de son comprend un composant piézoélectrique.

13. Transducteur acoustique selon l'une quelconque des revendications 8 à 12, **caractérisé en ce que** les corps de transmission (11) sont magnétiques ou aimantables.

14. Transducteur acoustique selon la revendication 13, **caractérisé en ce qu'**un aimant est prévu sous la surface du capteur.
